# NEUE EUROPÄISCHE PATENTSCHRIFT

(11) **EP 0 764 751 B2**
(45) Veröffentlichungstag und Bekanntmachung des Hinweises auf die Entscheidung über den Einspruch: **09.02.2005**
(45) Hinweis auf die Patenterteilung: 16.05.2001
(21) Anmeldenummer: 96114670.1
(22) Anmeldetag: 13.09.1996
(51) Int. Cl.: E05B 47/00, F16H 35/10

(54) **Elektromotorischer Stellantrieb für Kraftfahrzeuge**
Electric motor actuator for motor vehicles
Positionneur à moteur électrique de véhicule

(30) Priorität: 23.09.1995 DE 19535437
(43) Veröffentlichungstag der Anmeldung: 26.03.1997
(73) Patentinhaber: Hella KGaA Hueck & Co., 59552 Lippstadt (DE)
(72) Erfinder: Hüser, Theodor, 59590 Geseke (DE); Muschner, Andreas, 33100 Paderborn-Dahl (DE); Seipel, Arnold, 33181 Haaren (DE); Stümpel, Josef, 33178 Borchen (DE); von der Ahe, Wilfried, 33178 Borchen (DE)

(56) Entgegenhaltungen:
- EP-A- 0 265 973
- EP-A- 0 287 860
- EP-A- 0 512 139
- DE-A- 3 247 490
- DE-A- 3 309 962
- DE-A- 3 631 163
- DE-C- 3 631 043
- GB-A- 1 005 520
- US-A- 2 517 373
- US-A- 2 778 239
- US-A- 4 573 723
- US-A- 4 918 998
- US-A- 4 927 203

## Beschreibung

Die Erfindung betrifft einen elektromotorischen Stellantrieb für Kraftfahrzeuge, insbesondere für Zentralverriegelungen, mit einem Gehäuse, mit einem Elektromotor, der eine Welle mit Gewinde treibt, und mit einer Schubstange, die mit einem Gegengewinde in das Gewinde der Welle eingreift, und die im Gehäuse längsverschieblich geführt ist.

Derartige elektromotorische Stellantriebe sind aus der EP 0 287 860 A2, EP 0 358 346 B1, DE 39 13 995 C2 DE 3 631 043 C1 bekannt. Die dortigen Stellantriebe weisen jedoch im Bereich der Getriebeanordnung und im Bereich der Kraftübertragung von der Welle auf die Schubstange, insbesondere im in das Gehäuse eingefahrenen Zustand der Schubstange eine starre Kraftübertragung auf. Um eine Beschädigung dieser vorbekannten Stellantriebe durch das Drehmoment des Elektromotors beim Bewegen der Schubstange auf die Endanschläge zu vermeiden, ist bei diesen Stellantrieben eine Rutschkupplung erforderlich, die das Überschußdrehmoment des Elektromotors beim Anschlag der Schubstange auf die Endabschläge unwirksam macht.

Eine derartige Rutschkupplung ist fertigungsund kostenaufwendig. Zudem sind derartige Rutschkupplungen einem erheblichen Verschleiß unterworfen, was insbesondere bei intensiver Nutzung des Stellantriebes auch zu Ausfällen der Stellantriebe führen kann.

Die Erfindung hat die Aufgabe, einen elektromotorischen Stellantrieb für Kraftfahrzeuge zu schaffen, der einfach und kostengünstig herstellbarist, der nur geringem Verschleiß unterworfen ist und der eine gegenüber dem Vorbekannten erhöhte Betriebssicherheit aufweist.

Diese Aufgabe wird erfindungsgemäß durch die Merkmale des Patentanspruchs 1 gelöst.

Bei den vorbekannten Stellantrieben ist die Länge des Wellengewindes mindestens so groß wie der Hub der Schubstange, wogegen die Länge des Gegengewindes gegenüber der Länge des Wellengewindes wesentlich kleiner ist. Diese Längenverhältnisse sind bei der vorliegenden Erfindung so umgekehrt, daß zwischen der Antriebsseite der Welle, die von dem Drehmoment des Elektromotors beaufschlagt ist, und der Abtriebsseite der Welle, an der das Wellengewinde angeordnet ist, ein Wellenbereich ohne Gewindefreibleibt, der bei der Bewegung der Schubstange auf einen der beiden Endanschläge eine Torsion der Welle ermöglicht. Diese erfindungsgemäß ermöglichte Wellentorsion fängt den Drehmomentüberschuß, den der Elektromotor beim Bewegen der Schubstangen auf eine der Endanschläge erzeugt, ab und vernichtet ihn durch die Torsion der Welle, wodurch eine Beschädigung des Stellantriebes in diesem Betriebszustand ohne weitere Maßnahmen verhindert wird.

Bei der vorliegenden Erfindung ist also, anders als beim Vorbekannten, keine zusätzliche und kostenaufwendige Rutschkupplung erforderlich. Dies macht den erfindungsgemäß ausgestalteten Stellantrieb gegenüber dem Vorbekannten besonders fertigungs- und kostengünstig. Zudem ist die Torsionswellenanordnung nahezu keinem Verschleiß unterworfen, so daß ein Ausfall des erfindungsgemäßen Stellantriebes aufgrund einer besonders häufigen Benutzung nahezu ausgeschlossen ist.

Vorteilhafte Ausgestaltungen und Weiterbildungen des erfindungsgemäßen Stellantriebes gehen aus den Unteransprüchen hervor.

So ist es besonders vorteilhaft, wenn die Länge des Gewindes der Welle etwa ein Drittel der Länge des Gewindes der Schubstange beträgt. Bei diesem Längenverhältnis ist die Länge des Wellengewindes ausreichend, um die erforderlichen Kräfte auf die Schubstange zu übertragen. Andererseits verbleibt bei diesem Längenverhältnis ein genügend großer Wellenbereich, der kein Gewinde aufweist und insofern der Torsion als Torsionskupplung unterworfen werden kann.

Aus demselben Grund kann das Gewinde der Welle 3 bis 5, vorzugsweise 4 Gewindegänge aufweisen, die ebenfalls zur Übertragung der erforderlichen Kräfte ausreichen, wie Versuche gezeigt haben. Insbesondere in diesem Fall kann das Gewinde auch nur einen Teilumfang der Welle umfassen, um gegebenenfalls auch die Verbiegung der Welle senkrecht zur Wellenachse bei deren Torsion zu ermöglichen.

Häufig wird zwischen Elektromotor und Welle eine Getriebeanordnung vorgesehen, deren Motorritzel ein drehfest mit der Welle verbundenes Zahnrad treibt. In diesem Fall kann das Gewinde besonders vorteilhaft auf der vom Zahnrad abgewandten Seite der Welle angeordnet sein, um eine möglichst große Länge des tordierbaren Wellenbereiches zu gewährleisten.

Eine weitere sinnvolle Ausgestaltung des erfindungsgemäßen Stellantriebes stellt in diesem Zusammenhang die Verwendung eines an sich bekannten Speichenzahnrades dar, das ebenfalls bei der Bewegung der Schubstange auf eine ihrer Anschläge eine Torsion der Nabe des Speichenzahnrades gegenüber dem Zahnkranz ermöglicht. Versuche haben gezeigt, daß die gemeinsame Verwendung eines Speichenzahnrades mit der tordierbaren Welle eine Verdrehung des Zahnkranzes gegenüber dem Wellengewinde von bis zu 360° bei Verwendung von Kunststoffmaterialien zuläßt, ohne daß die Anordnung dabei bleibend geschädigt würde. In diesem Zusammenhang kann besonders vorteilhaft das Speichenzahnrad derart gestaltet sein, daß die Speichen des Zahnrades eine Zahnung aufweisen, die in eine Torsionsfeder einer Torsionsfederkassette eingreift. Die Torsionsfeder dient dabei zur Rückstellung des elektromotorischen Stellantriebes in seine Grundstellung mit eingefahrener Schubstange, sofern der Elektromotor stromlos ist. Die Anordnung der Torsionsfeder in einer Torsionsfederkassette ermöglicht die einfache Montage der Anordnung bestehend aus Welle und Torsionsfeder in dem Gehäuse des elektromotorischen Stellantriebs.

Ist eine derartige Getriebeanordnung vorgesehen, so kann besonders vorteilhaft auf beiden Seiten des Zahnrades ein Lagerbereich bzw. ein Fortsatz der Welle vorgesehen sein, der mit einer Einschnürung des Gehäuses bzw. einem Wellenlager korrespondiert. Mit diesen weiterführenden Maßnahmen wird eine Anordnung geschaffen, bei der das Getriebezahnrad der Welle durch die beidseitige Lagerung sehr gut gegenüber dem Motorritzel lagefixiert ist. Andererseits wird bei dieser Anordnung die gewünschte Torsion der Welle bei der Bewegung der Schubstange auf eine ihrer Anschläge nicht behindert.

Aus Platz- und Stabilitätsgründen ist es besonders vorteilhaft, wenn das Gewinde der Welle ein Außengewinde ist und wenn das Gegengewinde der Schubstange ein Innengewinde ist, das in einer Bohrung der Schubstange angeordnet ist. Durch diese weiterführenden Maßnahmen kann die Schubstange in ihrem Querschnitt relativ groß ausgebildet werden. Die Schubstange ist das einzige Teil, das aus dem Gehäuse des elektromotorischen Stellantriebes hinausragt und insofern besonderen mechanischen Belastungen ausgesetzt werden kann. Diese mechanischen Belastungen können durch eine Schubstange großen Querschnitts gut abgefangen werden.

Die Schubstange kann besonders vorteilhaft Anschlagelemente aufweisen, die mit Gehäuseanschlägen zusammenwirken. Diese separaten Anschlagelemente können bei entsprechender Auslegung elastisch gegenüber der Schubstange verschiebbar sein, so daß ein hartes Anschlagen der Schubstange an dem Gehäuse und damit eine weitere Möglichkeit der Beschädigung des Gehäuses zusätzlich vermieden wird. In diesem Zusammenhang können die Anschlagelemente besonders vorteilhaft kastenförmig im Sinne eines Viergelenks mit Filmscharnieren ausgebildet werden. Diese Ausbildung der Anschlagelemente ist insbesondere beim Fertigen der Schubstange aus Kunststoffmaterial einfach realisierbar, wobei durch die kastenförmige Ausbildung die gewünschte elastische Verschiebung der Anschlagelemente gegenüber der Schubstange gewährleistet wird.

Andererseits kann die Welle auf der vom Gewinde abgewandten Seite einen Wellenflansch aufweisen, der mit einer Stirnseite der Schubstange zusammenwirkt. Diese Anordnung stellt quasi einen weiteren Anschlag dar, der dann wirksam wird, wenn die Anschlagelemente bereits an den Gehäuseanschlägen anliegen und elastisch gegenüber der Schubstange verschoben sind. Mit dieser weiteren Maßnahme wird eine übermäßige Torsion, die zu einer bleibenden Verformung der Welle führen kann, vermieden und die weitere Torsion dem gegebenenfalls vorgesehenen Flügelzahnrad bzw. den übrigen Teilen der Getriebeanordnung überlassen.

Zur kostengünstigen Fertigung des erfindungsgemäßen elektromotorischen Stellantriebes können die elektrischen Steckkontakte, die die elektrische Verbindung zwischen dem Elektromotor und dem übrigen Teil des Kraftfahrzeugbordnetzes herstellen, in die Gehäusewandung eingedrückt und zugleich in den Elektromotor zur elektrischen Verbindung eingesteckt sein.

Die erforderliche längsverschiebliche Führung der Schubstange in dem Gehäuse des elektromotorischen Stellantriebes kann durch eine Labyrinthdichtung besonders vorteilhaft erfolgen, die einstückig mit dem Gehäuse bzw. den einzelnen Gehäuseteilen ausgebildet ist.

Ein Ausführungsbeispiel des erfindungsgemäßen elektromotorischen Stellantriebes ist in den Zeichnungen dargestellt und wird im folgenden anhand der Zeichnungen näher erläutert.

Es zeigen
- Figur 1: einen Teilschnitt durch einen erfindungsgemäßen Stellantrieb in einer Seitenansicht;
- Figur 2: einen Schnitt durch den erfindungsgemäßen Stellantrieb gemäß der Schnittlinie B-B in Figur 1;
- Figur 3: einen Schnitt durch den erfindungsgemäßen Stellantrieb gemäß der Schnittlinie A-A in Figur 1;
- Figur 4: einen Schnitt durch den Stellantrieb gemäß der Schnittlinie C-C in Figur 1 und
- Figur 5: einen Schnitt durch den Stellantrieb gemäß der Schnittlinie D-D in Figur 1.

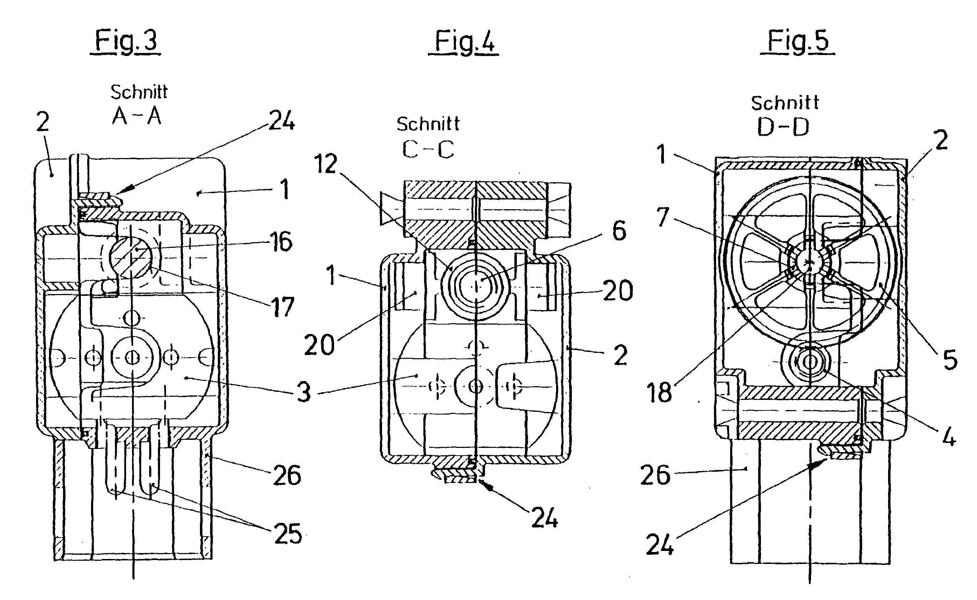

In den Figuren weist der elektromotorische Stellantrieb für die Zentralverriegelung eines Kraftfahrzeuges ein Gehäuse, bestehend aus einem ersten Gehäuseteil (1) und einem zweiten Gehäuseteil (2) auf. Innerhalb des Gehäuses ist ein Elektromotor (3) fixiert, der auf seiner Motorwelle ein Motorritzel (4) trägt. Dieses Motorritzel (4) ist Teil einer Getriebeanordnung, die weiterhin ein Zahnrad (5) aufweist, das als Speichenzahnrad ausgebildet ist, wie aus der Figur 5 hervorgeht. Dieses Speichenzahnrad (5) ist drehfest mit einer Welle (6) verbunden, die zugleich als Torsionsstab wirkt. Das Speichenzahnrad (5) ist gemeinsam mit der Welle (6) einstückig aus Kunststoff gespritzt.

Einstückig mit den Speichen des Speichenzahnrades (5) ist eine Zahnung (7) ausgebildet, die in eine Torsionsfeder eingreift, die in einer Torsionsfederkassette (8) angeordnet ist. Diese Torsionsfeder bewirkt das Verdrehen der Welle (6) im unbestromten Zustand des Elektromotors (3) derart, daß eine Schubstange (12) soweit wie möglich in das Innere des Gehäuses eingezogen wird.

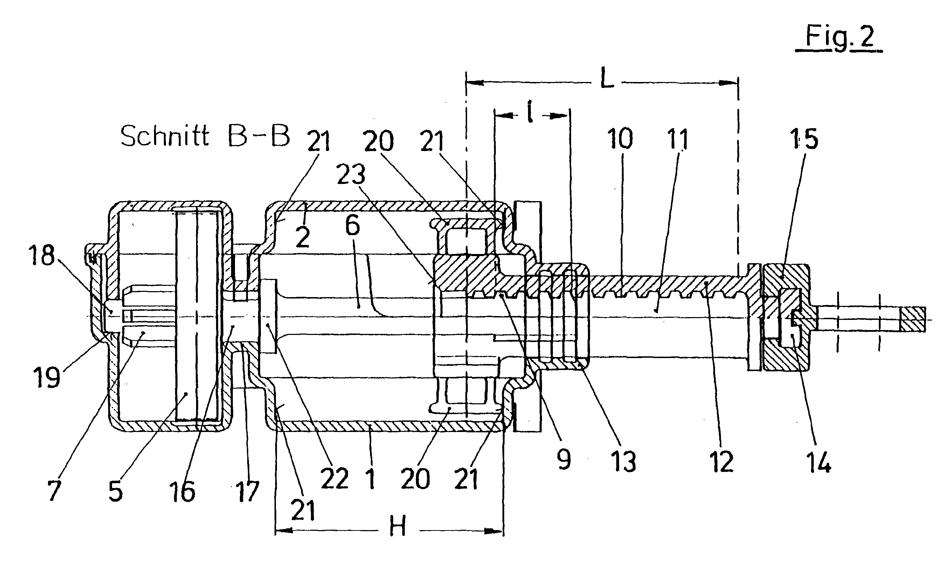

Auf einem Teilurnfang der Welle (6) ist ein Außengewinde (9) angeordnet, wie aus der Figur 2 hervorgeht. Dieses Außengewinde (9) auf dem Außenumfang der Welle (6) greift in ein Gegengewinde (10) ein, das als Innengewinde in einer Bohrung (11) der Schubstange (12) ausgebildet ist.

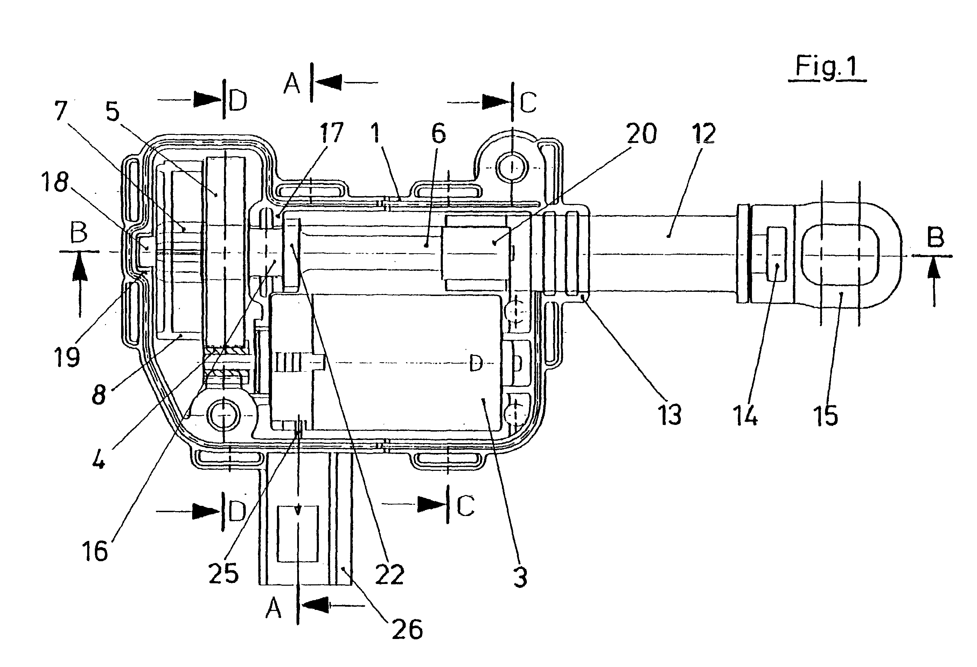

Die Schubstange (12) ist längsverschieblich in eine Labyrinthdichtung (13) des Gehäuses gelagert. Die Labyrinthdichtung ist einstückig mit den Kunststoffteilen des ersten und zweiten Gehäuseteiles (1, 2) ausgebildet. Am in den Figuren 1 und 2 rechten Ende der Schubstange (12) ist ein Knopf (14) angeformt, der ein austauschbares und somit an den jeweiligen Anwendungsfall des erfindungsgemäßen elektromotorischen Stellantriebes anpaßbares Kupplungsteil (15) trägt.

Zur axialen und radialen Lagerung der Welle (6) im Gehäuse weist die Welle (6) einerseits einen Lagerbereich (16) auf, der in einer Einschnürung (17) des Gehäuses angeordnet ist. Weiterhin weist die Welle (6) jenseits der Zahnung (7) einen Fortsatz (18) auf, der in einem weiteren Wellenlager (19) des Gehäuses angeordnet ist. Damit ist die Welle (6) auf beiden Seiten des Speichenzahnrades (5) im Gehäuse gelagert.

Die Schubstange (12) trägt im inneren des Gehäuses zwei gegenüberliegende Anschlagelemente (20), die kastenförmig ausgebildet sind und einstückig mit der Schubstange (12) aus Kunststoff angespritzt sind. Die Kastenform der Abschlagelemente (20) bildet somit ein Viergelenk mit Filmschamieren, das mit Gehäuseanschlägen (21) zusammenwirkt. Die Anordnung, bestehend aus den Anschlagelementen (20) und den Gehäuseanschlägen (21), wird jeweils dann wirksam, wenn die Schubstange (12) im Gehäuse auf die Endanschläge bewegt wird. Diese federnden Anschlagelemente (20) sollen den Schlag der Schubstange (12) auf das Gehäuse abfedern und eine plötzliche und übermäßige Torsion der Welle (6) vermeiden.

Nachdem diese Anordnung, bestehend aus den Anschlagelementen (20) und den Gehäuseanschlägen (21), wirksam geworden ist und die Welle (6) tordiert ist, wird ein Wellenflansch (22) der Welle (6) wirksam, der sich an eine Stirnseite (23) der Schubstange (12) anlegt und eine weitere, die Welle (6) schädigende Torsion vermeidet, und die weitere Drehmomentkompensation des Elektromotors (3) dem Speichenzahnrad (5) überläßt.

Die beiden Gehäuseteile (1, 2) sind durch Rastverbindungen (24) miteinander verbunden. Steckkontakte (25) sind in die Gehäusewandung ein- und durch die Gehäusewandung derart hindurchgesteckt, daß sie weiterhin in den Elektromotor (3) eingesteckt werden können und die elektrische Kontaktierung des Elektromotors mit den übrigen Teilen eines Kraftfahrzeugbordnetzes bewirken. Die Steckkontakte (25) sind zum Schutz gegen mechanische Beschädigungen in einem Steckerkorb (26) einstückig mit den Gehäuseteilen (1, 2) angeordnet.

Der Hub der Schubstange (12) im Gehäuse ist in der Figur 2 mit (H) gekennzeichnet. Die Länge des Gegengewindes (10) der Schubstange (12) ist in derselben Figur mit (L) gekennzeichnet. Die Länge des Gewindes (9) der Welle (6) ist in derselben Figur mit (I) gekennzeichnet.

Man erkennt in der Figur 2, daß die Länge (L) des Gegengewindes (10) größer ist als der Hub (H) der Schubstange (12) im Gehäuse, mindestens jedoch gleich groß ist wie dieser Hub. Demgegenüber ist die Länge (I) des Gewindes (9) wesentlich kleiner als die Länge (L) des Gegengewindes (10), und es ist das Gewinde (9) an der vom Speichenzahnrad (5) abgewandten Seite der Welle (6) angeordnet, so daß zwischen dem Gewinde (9) und dem Speichenzahnrad (5) ein Wellenbereich der Welle (6) ausgebildet ist, der kein Gewinde aufweist und insofern eine Torsion der Welle (6) im Bereich zwischen dem Speichenzahnrad (5) und dem Gewinde (9) ermöglicht. Diese Torsion der Welle (6) vermag erfindungsgemäß das überschüssige Drehmoment des Elektromotors (3) beim Anschlagen der Schubstange (12) an die Gehäuseanschläge (21) des Gehäuses mit den Anschlagelementen (20) abzufangen und eine Beschädigung des erfindungsgemäßen elektromotorischen Stellantriebes zu verhindern. Denselben Zweck hat das Speichenzahnrad (5), das ebenfalls eine Torsion der Zahnradnabe gegenüber dem Zahnkranz ermöglicht. Eine Rutschkupplung ist bei dieser besonderen konstruktiven Ausbildung des elektromotorischen Stellantriebes nicht erforderlich.

### Bezugszeichenliste

### Elektromotorischer Stellantrieb für Kraftfahrzeuge

- 1: erstes Gehäuseteil
- 2: zweites Gehäuseteil
- 3: Elektromotor
- 4: Motorritzel auf Motorwelle
- 5: Speichenzahnrad
- 6: Welle / Torsionsstab
- 7: Zahnung
- 8: Torsionsfederkassette
- 9: Außengewinde auf Teilumfang von (6)
- 10: (Innengewinde) Gegengewinde
- 11: Bohrung
- 12: Schubstange
- 13: Labyrinthdichtung
- 14: Knopf
- 15: Kupplungsteil
- 16: Lagerbereich von (6)
- 17: Einschnürung des Gehäuses
- 18: Fortsatz
- 19: Wellenlager
- 20: Anschlagelemente, kastenförmig, Viergelenk mit Filmscharnier
- 21: Gehäuseanschläge
- 22: Wellenflansch
- 23: Stirnseite von (12)
- 24: Rastverbindung
- 25: Steckkontakte in Gehäusewandung eingedrückt, im Motor eingesteckt
- 26: Steckerkorb
- H: Hub der Schubstange (12)
- L: Länge des Gegengewindes
- l: Länge des Gewindes

## Patentansprüche

1. Elektromotorischer Stellantrieb für Kraftfahrzeuge, insbesondere für Zentralverriegelungen,
- mit einem Gehäuse (1,2),
- mit einem Elektromotor (3), der eine einstückige Welle (6) mit Gewinde (9) treibt, wobei das Gewinde (9) als Außengewinde auf dem Außenumfang der Welle (6) ausgebildet ist,
- mit einer Schubstange (12), die mit einem Gegengewinde (10) in das Gewinde (9) der Welle (6) eingreift,
- wobei die Schubstange (12) im Gehäuse (1,2) längsverschieblich geführt ist,
- wobei die Länge (L) des Gegengewindes der Schubstange (12) mindestens gleich dem Hub (H) der Schubstange (12) gegenüber dem Gehäuse (1,2) ist,
- wobei die Länge (l) des Gewindes (9) auf der Welle (6) kleiner ist als die Länge des Gegengewindes (10) der Schubstange (12)
- wobei das Gewinde (9) der Welle (6) an der Abtriebsseite der Welle angeordnet ist, so daß sich ein gewindefreier Wellenbereich ergibt, **dadurch gekennzeichnet, dass** der gewinde freie Wellenbereich, des aus Kunststoff ausgebildeten Welle. bei der Bewegung der Schubstange (12) auf Gehäuseanschläge (21) eine Torsion der Welle (6) ermöglicht, um den Drehmomentüberschuß abzufangen, den der Elektromotor (3) beim Bewegen der Schubstange (12) auf einen der Gehäuseanschläge erzeugt, wodurch eine Beschädigung des Stellantriebs in diesem Betriebszustand verhindert wird.

2. Elektromotorischer Stellantrieb nach Anspruch 1, **dadurch gekennzeichnet, daß** die Länge (1) des Gewindes (9) der Welle (6) etwa ein Drittel der Länge (L) des Gegengewindes (10) der Schubstange (12) beträgt.

3. Elektromotorischer Stellantrieb nach Anspruch 1, **dadurch gekennzeichnet, daß** das Gewinde (9) der Welle (6) 3 bis 5, vorzugsweise 4 Gewindegänge aufweist.

4. Elektromotorischer Stellantrieb nach Anspruch 1, **dadurch gekennzeichnet, daß** das Gewinde (9) der Welle (6) nur einen Teilumfang der Welle (6) umfaßt.

5. Elektromotorischer Stellantrieb nach Anspruch 1, **dadurch gekennzeichnet, daß** zwischen Elektromotor (3) und Welle (6) eine Getriebeanordnung vorgesehen ist, deren Motorritzel (4) ein drehfest mit der Welle (6) verbundenes Zahnrad (5) treibt und daß das Gewinde (9) auf der vom Zahnrad (5) abgewandten Seite der Welle (6) angeordnet ist.

6. Elektromotorischer Stellantrieb nach Anspruch 5, **dadurch gekennzeichnet, daß** das Zahnrad (5) ein Speichenzahnrad ist und daß die Speichen des Zahnrades (5) eines Zahnung (7) aufweisen, die in eine Torsionsfeder einer Torsionsfederkassette (8) eingreifen.

7. Elektromotorischer Stellantrieb nach Anspruch 5, **dadurch gekennzeichnet, daß** auf beiden Seiten des Zahnrades (5) ein Lagerbereich (16) bzw. ein Fortsatz (18) der Welle (6) vorgesehen ist, der mit einer Einschnürung (17) des Gehäuses bzw. einem Wellenlager (19) korrespondiert.

8. Elektromotorischer Stellantrieb nach Anspruch 1, **dadurch gekennzeichnet, daß** das Gewinde (9) der Welle (6) ein Außengewinde ist und daß das Gegengewinde (10) der Schubstange (12) ein Innengewinde ist, das in einer Bohrung (11) der Schubstange (12) angeordnet ist.

9. Elektromotorischer Stellantrieb nach Anspruch 1, **dadurch gekennzeichnet, daß** die Schubstange (12) Anschlagelemente (20) aufweist, die mit Gehäuseanschlägen (21) zusammenwirken.

10. Elektromotorischer Stellantrieb nach Anspruch 9, **dadurch gekennzeichnet, daß** die Anschlagelemente (20) kastenförmig im Sinne eines Viergelenks mit Filmschamieren ausbildet sind.

11. Elektromotorischer Stellantrieb nach Anspruch 1, **dadurch gekennzeichnet, daß** die Welle (6) auf der vom Gewinde (9) abgewandten Seite einen Wellenflansch (22) aufweist, der mit einer Stirnseite (23) der Schubstange (12) zusammenwirkt.

12. Elektromotorischer Stellantrieb nach Anspruch 1, **dadurch gekennzeichnet, daß** elektrische Steckkontakte (25) in die Gehäusewandung eingedrückt und zugleich in den Elektromotor (3) zur elektrischen Verbindung eingesteckt sind.

13. Elektromotorischer Stellantrieb nach Anspruch 1, **dadurch gekennzeichnet, daß** die Schubstange (12) in einer einstückig mit dem Gehäuse ausgebildeten Labyrinthdichtung (13) geführt ist.

## Claims

1. Electromotive actuator for motor vehicles, more particularly for central locking systems,
- having a housing (1, 2)
- with an electric motor (3) which drives an integral shaft (6) incorporating a thread (9), the thread (9) being configured as an external thread on the outer circumference of the shaft (6),
- having a push-rod (12) which engages by a mating thread (10) into the thread (9) of the shaft (6),
- the push-rod (12) being set in the housing (1, 2) in a manner enabling it to be displaced longitudinally,
- the length (L) of the mating thread of the push-rod (12) being at least equal to the stroke (H) of the push-rod (12) relative to the housing (1, 2),
- the length (I) of the thread (9) on the shaft (6) being smaller than the length of the mating thread (10) of the push-rod (12),
- and the thread (9) of the shaft (6) being arranged on the output end of the shaft so that the result is an unthreaded shaft portion,
**characterised in that**
- the unthreaded shaft portion of the plastics shaft makes torsion of the shaft (6) possible as the push-rod (12) moves onto stops (21) incorporated on the housing, in order to intercept the excess torque generated by the electric motor (3) as the push-rod (12) moves onto one of the stops on the housing, thereby preventing damage to the actuator in this operating state.

2. Electromotive actuator according to claim 1, **characterised in that** the length (I) of the thread (9) of the shaft (6) accounts for roughly one-third of the length (L) of the mating thread (10) of the push-rod (12).

3. Electromotive actuator according to claim 1, **characterised in that** the thread (9) of the shaft (6) has 3 to 5, preferably 4 turns.

4. Electromotive actuator according to claim 1, **characterised in that** the thread (9) of the shaft (6) occupies only part of the circumference of the shaft (6).

5. Electromotive actuator according to claim 1, **characterised in that** between the electric motor (3) and the shaft (6) there is provided a gearing arrangement the motor pinion (4) of which drives a gear wheel (5) which is joined to the shaft (6) in a manner locked against rotation and that the thread (9) is arranged on the side of the shaft (6) that is remote from the gear wheel (5).

6. Electromotive actuator according to claim 5, **characterised in that** the gearwheel (5) is a spoked gear wheel and that the spokes of the gear wheel (5) have teeth (7) which engage in a torsion spring of a torsion bar cartridge (8).

7. Electromotive actuator according to claim 5, **characterised in that** provided on either side of the gear wheel (5) is a bearing area (16) or a continuation (18) of the shaft (6), respectively, which corresponds with a necked area (17) of the housing, or a shaft bearing (19), respectively.

8. Electromotive actuator according to claim 1, **characterised in that** the thread (9) of the shaft (6) is an external thread and that the mating thread (10) of the push-rod (12) is an internal thread which is disposed in a bore (11) of the push-rod (12).

9. Electromotive actuator according to claim 1, **characterised in that** the push-rod (12) has stop elements (20) which cooperate with stops (21) incorporated on the housing.

10. Electromotive actuator according to claim 9, **characterised in that** the stop elements (20) are box-shaped in construction in the manner of a four-bar linkage with film hinges.

11. Electromotive actuator according to claim 1, **characterised in that** on the side remote from the thread (9), the shaft (6) incorporates a shaft flange (22) which cooperates with a front face (23) of the push-rod (12).

12. Electromotive actuator according to claim 1, **characterised in that** electrical plug-in contacts (25) are pressed into the wall of the housing and at the same time are pushed into the electric motor (3) to make the electrical connection.

13. Electromotive actuator according to claim 1, **characterised in that** the push-rod (12) runs in a labyrinth seal (13) which is of integral construction with the housing.

## Revendications

1. Mécanisme de commande à moteur électrique pour véhicules automobiles, en particulier pour des verrouillages centralisés,
- comprenant un boîtier (1, 2),
- comprenant un moteur électrique (3) qui entraîne un arbre (6) d'une seule pièce avec un pas de vis (9), ledit pas de vis (9) étant réalisé comme filetage sur la périphérie extérieure de l'arbre (6),
- comprenant une tige de poussée (12) qui engage le pas de vis (9) de l'arbre (6) au moyen d'un pas de vis complémentaire (10),
- dans lequel la tige de poussée (12) est guidée en déplacement longitudinal dans le boîtier (1, 2),
- dans lequel la longueur (L) du pas de vis complémentaire (10) de la tige de poussée (12) est au moins égale à la course (H) de la tige de poussée (12) par rapport au boîtier (1, 2),
- dans lequel la longueur (1) du pas de vis (9) de l'arbre (6) est inférieure à la longueur du pas de vis complémentaire (10) de la tige de poussée (12),
- dans lequel le pas de vis (9) de l'arbre (6) est agencé côté sortie de l'arbre (6), de sorte qu'il en résulte une zone d'arbre exempte de pas de vis,
**caractérisé en ce que**
- la zone exempte de pas de vis de l'arbre réalisé en matière plastique permet une torsion de l'arbre (6) lors du mouvement de la tige de poussée (12) en direction de butées de boîtier (21) afin d'encaisser l'excès du couple de rotation que le moteur électrique (3) engendre lors du mouvement de la tige de poussée (12) vers l'une des butées de boîtier, grâce à quoi un endommagement du mécanisme de commande est empêché dans cet état de fonctionnement.

2. Mécanisme de commande à moteur électrique selon la revendication 1, **caractérisé en ce que** la longueur (I) du pas de vis (9) de l'arbre (6) s'élève approximativement à un tiers de la longueur (L) du pas de vis complémentaire (10) de la tige de poussée (12).

3. Mécanisme de commande à moteur électrique selon la revendication 1, **caractérisé en ce que** le pas de vis (9) de l'arbre (6) présente trois à cinq pas, de préférence quatre pas.

4. Mécanisme de commande à moteur électrique selon la revendication 1, **caractérisé en ce que** le pas de vis (9) de l'arbre (6) ne s'étend que sur une circonférence partielle de l'arbre (6).

5. Mécanisme de commande à moteur électrique selon la revendication 1, **caractérisé en ce qu'**entre le moteur électrique (3) et l'arbre (6), il est prévu un agencement à engrenages dont le pignon de moteur (4) entraîne une roue dentée (5) reliée solidaire en rotation à l'arbre (6) et **en ce que** le pas de vis (9) est agencé sur le côté de l'arbre (6) qui est détourné de la roue dentée (5).

6. Mécanisme de commande à moteur électrique selon la revendication 5, **caractérisé en ce que** la roue dentée (5) est une roue dentée à rayons et **en ce que** les rayons de la roue dentée (5) présentent une denture (7) qui s'engage dans un ressort de torsion d'une cassette (8) à ressort de torsion.

7. Mécanisme de commande à moteur électrique selon la revendication 5, **caractérisé en ce que** des deux côtés de la roue dentée (5) est prévue une zone de palier (16) ou un prolongement (18) de l'arbre (6) qui correspond à un étranglement (17) du boîtier ou à un palier d'arbre (19).

8. Mécanisme de commande à moteur électrique selon la revendication 1, **caractérisé en ce que** le pas de vis (9) de l'arbre (6) est un filetage et **en ce que** le pas de vis complémentaire (10) de la tige de poussée (12) est un taraudage qui est ménagé dans un perçage (11) de la tige de poussée (12).

9. Mécanisme de commande à moteur électrique selon la revendication 1, **caractérisé en ce que** la tige de poussée (12) présente des éléments de butée (20) qui coopèrent avec des butées de boîtier (21).

10. Mécanisme de commande à moteur électrique selon la revendication 9, **caractérisé en ce que** les éléments de butée (20) sont réalisés en forme de caisson dans le sens d'un quadrilatère articulé avec des charnières à bandes

11. Mécanisme de commande à moteur électrique selon la revendication 1, **caractérisé en ce que** l'arbre (6) présente sur la face détournée du pas de vis (9) une bride d'arbre (22) qui coopère avec une face frontale (23) de la tige de poussée (12).

12. Mécanisme de commande à moteur électrique selon la revendication 1, **caractérisé en ce que** des fiches mâles (24) électriques sont enfoncées dans la paroi de boîtier et branchées en même temps dans le moteur électrique (3) pour réaliser la connexion électrique.

13. Mécanisme de commande à moteur électrique selon la revendication 1, **caractérisé en ce que** la tige de poussée (12) est guidée dans un joint à labyrinthe (13) réalisé d'un seul tenant avec le boîtier.
